Europäisches Patentamt

European Patent Office

Office européen des brevets

(19)

(11) Veröffentlichungsnummer: **0 123 056**
**B1**

(12) # EUROPÄISCHE PATENTSCHRIFT

(45) Veröffentlichungstag der Patentschrift:
19.11.87

(51) Int. Cl.⁴: **C 08 B 11/20**

(21) Anmeldenummer: **84102013.4**

(22) Anmeldetag: **27.02.84**

(54) Verfahren zur kontinuierlichen Granulierung von Carboxymethylcellulose.

(30) Priorität: **09.03.83 DE 3308420**

(43) Veröffentlichungstag der Anmeldung:
**31.10.84 Patentblatt 84/44**

(45) Bekanntmachung des Hinweises auf die Patenterteilung:
**19.11.87 Patentblatt 87/47**

(84) Benannte Vertragsstaaten:
**DE FR GB IT NL SE**

(56) Entgegenhaltungen:
**DE - A - 1 959 866**
**DE - A - 3 032 778**
**GB - A - 349 007**
**GB - A - 777 405**
**US - A - 2 607 772**

(73) Patentinhaber: **Wolff Walsrode Aktiengesellschaft,
Postfach, D-3030 Walsrode 1 (DE)**

(72) Erfinder: **Bernert, Claus-Rüdiger, Dr., Radewiesen 23,
D-3030 Walsrode 1 (DE)**
Erfinder: **Kirchner, Hans-Gert, Dipl.-Ing., Kirchenweg 8,
D-3036 Bomlitz (DE)**
Erfinder: **Näder, Reinhard, Dr., Wagnerstrasse 7,
D-3030 Walsrode 1 (DE)**

(74) Vertreter: **Zobel, Manfred, Dr. et al, c/o BAYER AG
Konzernverwaltung RP Patentabteilung Bayerwerk,
D-5090 Leverkusen (DE)**

EP 0 123 056 B1

# Beschreibung

Gegenstand der Erfindung ist ein Verfahren zur kontinuierlichen Granulierung von alkohol- und wasserfeuchter Carboxymethylcellulose (CMC), indem man die nach üblichen Verfahren erhaltene gereinigte und abgepresste Carboxymethylcellulose kontinuierlich in ein Wirbelbett fördert und während des Schlagzerkleinerns durch schnelllaufende Rührwerzeuge gleichzeitig mit Wasserdampf durchströmen lässt.

Bei den üblichen Verfahren zur Herstellung von Celluloseethern, insbesondere Carboxymethylcellulose, wird der Celluloseether nach der Alkalisierung und Veretherung mit wässrigem Alkohol, vorzugsweise wässrigem Ethanol, Propanol oder Methanol, gereinigt. Die Aufarbeitung der CMC zu einem rieselfähigen Granulat oder Pulver mit ausreichend hohem Schüttgewicht durch einfache Trocknung des alkoholhaltigen Feuchtgutes ist nicht möglich; es muss zunächst der Alkohol quantitativ entfernt und anschliessend das Produkt granuliert und getrocknet werden. Um den an der Carboxymethylcellulose anhaftenden Alkohol zu entfernen, wird die abgepresste Carboxymethylcellulose in einer ersten Stufe einer Vortrocknung, vorzugsweise einer Kontakttrocknung, Stromtrocknung, Drallrohrtrocknung oder Vakuumtrocknung, unterworfen, die jede für sich mit einigen Nachteilen behaftet ist. Soweit die Trocknungsstufe diskontinuierlich durchgeführt wird, ist sie zeitaufwendig und benötigt grosse Apparatevolumina. Ausserdem ist bei jeder der genannten Trocknungen nicht zu verhindern, dass eine grössere Menge Wasser mit verdampft, das bei der in der zweiten Stufe folgenden Granulierung des Produktes wieder benötigt wird, was zu unnötigem Energieverbrauch führt. Von besonderem Nachteil ist, dass die vom Alkohol befreite Carboxymethylcellulose eine watteähnliche, lockere Konsistenz aufweist, die eine weitere Verarbeitung sehr erschwert.

Zur Erreichung des gewünschten Schüttgewichtes und einer ausreichenden Rieselfähigkeit der CMC ist daher nach der Entfernung des Alkohols eine gesonderte Granulierung des Produktes unter Zusatz von Wasser erforderlich. Auch diese Verfahrensstufe wird meist diskontinuierlich in grossen Mischern durchgeführt, wobei neben dem Zeit- auch ein erheblicher Energieaufwand notwendig ist, da eine Granulierung erst nach längerer Verweilzeit wegen der nur zögernd stattfindenden Wasser-Aufnahme eintritt. Erst wenn eine genügende Granulatbildung, d.h. Kompaktierung des Produktes auf ein handhabbares Schüttgewicht von 300 bis 800 g/l, vorzugsweise 450 bis 650 g/l, eingetreten ist, kann eine endgültige Trocknung des Produktes erfolgen. Dabei hat es sich als nachteilig erwiesen, dass eine exakte Steuerung von Schüttgewicht und Siebspektrum, d.h. Staubanteil des Produktes, nicht möglich ist. Eine Steuerung dieser Parameter über die zugeführte Wassermenge vor der Granulierung erfordert zwecks Erlangung eines hohen Schüttgewichtes und eines niedrigen Pulveranteils im Endprodukt einen hohen Wassergehalt. Dies führt in aller Regel zu einer Überfeuchtung der CMC und damit zu einer erschwerten Endtrocknung des Produktes.

Aus der DE-A-3 032 778 ist ein Verfahren zur kontinuierlichen Homogenisierung und Pelletisierung von Celluloserohethern bekannt, bei dem der Feuchtigkeitsgehalt durch Zugabe von flüssigem Wasser oder Wasserdampf eingestellt werden soll. Es wird aber nicht angegeben, wie alkoholfeuchte Celluloserohether unter Abzug des Alkohols granuliert werden können.

Mit dem kontinuierlichen erfindungsgemässen Verfahren gelingt es, die gereinigte, abgepresste Carboxymethylcellulose in einem Verfahrensschritt gleichzeitig von dem anhaftenden Alkohol zu befreien und die gewünschte Granulierung der CMC durchzuführen.

Gegenstand der Erfindung ist ein kontinuierliches Verfahren zur Granulierung von nach üblichen Methoden hergestellter alkohol- und wasserfeuchter Carboxymethylcellulose (CMC), dadurch gekennzeichnet, dass die abgepresste, durch anhaftenden wässrigen Alkohol noch feuchte CMC kontinuierlich in ein wirbelbetterzeugendes Rühraggregat, dessen Länge- zu Durchmesser-Verhältnis > 1 ist und dessen radialumlaufendes Rührwerk (7) auf einer in Längsrichtung des Rühraggregates laufenden Welle (11) angebracht ist, eingebracht wird und von dem mit einer Umfanggeschwindigkeit von mindestens 2 m pro Sekunde umlaufenden Rührwerk (7) weiterbefördert und dabei schlagzerkleinert wird, wobei die Zerkleinerung durch senkrecht zum Rühraggregat angeordnete rotierende Messerköpfe (8) beschleunigt wird, wobei durch Wehre (10) die Verweilzeit der CMC verlängert wird, wobei die CMC mit 0,1 bis 1 kg Wasserdampf pro kg CMC in Kontakt gebracht wird, der im Gegenstrom geführt wird und wobei der Wasserdampf zusammen mit dem ausgetriebenen Alkohol (5) abgezogen wird und wobei die CMC nach einer Verweilzeit von mindestens 1 Minute aus dem Rühraggregat ausgetragen und in üblicher Weise getrocknet wird.

In einer bevorzugten Ausführungsform liegt das Länge- zur Durchmesser-Verhältnis des Rühraggregates im Bereich von 3:1 bis 10:1, besonders bevorzugt von 4:1 bis 8:1. In einer anderen bevorzugten Ausführungsform beträgt die Umfanggeschwindigkeit der Rührelemente 3 bis 5 m/sec. In einer weiteren bevorzugten Ausführungsform beträgt die Verweilzeit mindestens 5 min, insbesondere 10 bis 30 min.

Üblicherweise enthält die aus der Reinigung anfallende abgepresste Carboxymethylcellulose 20 bis 80 Gew.-% des zur Reinigung verwendeten wässrigen Alkohols, wobei der Alkoholanteil in der Regel 50% ausmacht. Mit dem erfindungsgemässen Verfahren gelingt es, diesen Alkoholanteil auf weniger als 0,1%, bezogen auf die aus dem Rühraggregat anfallende CMC, zu reduzieren und ihn nachher aus dem den Alkohol mitführenden abgezogenen Wasserdampf wieder zurückzugewinnen. Um den Alkohol praktisch restlos aus der CMC zu entfernen, ist es erforderlich, 0,1 bis 1 kg Wasserdampf pro kg CMC absolut trocken, einzuspeisen.

Nach dem erfindungsgemässen Verfahren gelingt es mit Hilfe der Wasserdampfmenge und/oder der Verweilzeit in dem Rühraggregat und/oder über die Rührgeschwindigkeit, das gewünschte Schüttgewicht des getrockneten Gutes von 300 bis 800 g/l, vorzugsweise 450 bis 650 g/l, die gewünschte Teilchengrösse von 0,1 bis 1 mm und den Staubanteil, vorzugsweise von höchstens 20%, in einfacher Weise zu steuern.

Das erfindungsgemässe Verfahren kann in allen bekannten Rühraggregaten, deren Länge- zu Durchmesser-Verhältnis grösser (1) ist und die mit einem an einer liegenden Welle angebrachten Rührwerk versehen sind, durchgeführt werden.

Der im Gegenstrom geführte Wasserdampf wird an wenigstens einer Stelle in das Rühraggregat eingebracht. Um den für die Granulierung notwendigen Wassergehalt von wenigstens 25%, vorzugsweise 30 bis 42%, zu erzielen, kann eine Wasserzugabe im letzten Drittel des Rühraggregates notwendig sein.

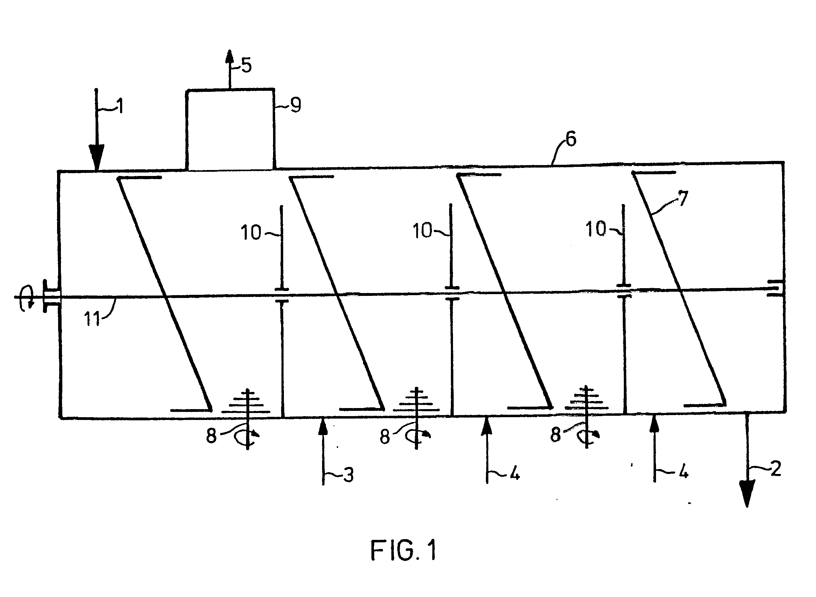

Das erfindungsgemässe Verfahren kann besonders bevorzugt in dem in Fig. 1 abgebildeten Rühraggregat durchgeführt werden. Gemäss dieser Abbildung wird die alkohol- und wasserfeuchte Carboxymethylcellulose in das Rühraggregat eingespeist (1), von dem radial umlaufenden Rührwerk (7), das auf einer liegenden Welle (11) angebracht ist, weiterbefördert und zerkleinert, wobei die Zerkleinerung durch die sehr schnell rotierenden Schlagleisten (Messerköpfe, 8) beschleunigt und die Verweilzeit infolge des Transports über die Wehre (10) verlängert wird. Der Wasserdampf wird durch Düsen (4) im Gegenstrom eingespeist und über den Dom (9) zusammen mit dem ausgetriebenen Alkohol (5) abgezogen. Die granulierte CMC wird am Ende des Rühraggregates (6) durch übliche Austrittsvorrichtungen (2) abgezogen.

Die nach dem erfindungsgemässen Verfahren hergestellten Carboxymethylcellulosen können auf allen üblichen Gebieten eingesetzt werden, vorzugsweise als Hilfsmittel in Bohrspülungsmitteln, als Bestandteil von Kosmetika, für Lebensmittel oder zur Behandlung von Papier und Leder.

Beispiel 1

Als Apparat dient ein Mischer nach Fig. 1 mit einem Volumen von 4000 Litern und einem Längen- zu Durchmesser-Verhältnis von 6,7. Der Mischer ist mit einer liegenden Welle mit radial angeordneten Mischelementen sowie mit drei 4-stufigen Messerköpfen ausgestattet. Vor dem Mischeraustritt ist ein höhenverstellbares Überlaufwehr angeordnet. An drei Stellen des Mischers im Bereich der Messerköpfe kann alternativ Wasserdampf oder Wasser in den Apparat eingespeist werden; zum Abzug der Brüden befindet sich am vorderen Mischerende ein Dom.

Dem Mischer wird kontinuierlich ein Stoffstrom von 1450 kg/h, bestehend aus 68% niedrigviskoser Carboxymethylcellulose, 20% Wasser und 12% Ethanol zugeführt. An den drei Messerköpfen wird zu gleichen Mengen aufgeteilt 0,3 kg Wasserdampf pro kg CMC eingeleitet. Bei einer Mischerdrehzahl von 75 min$^{-1}$ (entsprechend 3,1 m/s Umfanggeschwindigkeit) ist die Wehrstellung so eingestellt, dass das Produkt eine mittlere Verweilzeit von 10 Minuten im Mischer hat. Die Messerköpfe laufen mit 1500 min$^{-1}$.

Das aus dem Mischer austretende Produkt enthält weniger als 0,1% Ethanol und 31% Wasser. Die getrocknete Carboxymethylcellulose hat ein Schüttgewicht von 650 g/l und einen Staubanteil (Teilchen kleiner 0,2 mm Durchmesser) von unter 10%.

Beispiel 2

In der gleichen Apparatur wie in Beispiel 1 beschrieben wird ein Stoffstrom von 1550 kg/h, bestehend aus 66% mittelviskoser Carboxymethylcellulose, 21% Wasser und 13% Ethanol zugeführt. An den drei Messerköpfen wird zusammen 0,4 kg Wasserdampf pro kg CMC eingeleitet. Bei einer Mischerdrehzahl von 90 min$^{-1}$ (entsprechend 3,8 m/s Umfanggeschwindigkeit) ist die Wehrstellung so eingestellt, dass das Produkt eine mittlere Verweilzeit von 25 min im Mischer hat. Die Messerköpfe laufen mit 3000 min$^{-1}$.

Das aus dem Mischer austretende Produkt enthält weniger als 0,1% Ethanol und 36% Wasser. Die getrocknete Carboxymethylcellulose hat ein Schüttgewicht von 570 g/1 und einen Staubanteil von weniger als 15%.

Beispiel 3

In der gleichen Apparatur wie in Beispiel 1 beschrieben wird ein Stoffstrom von 1600 kg/h, bestehend aus 64% hochviskoser Carboxymethylcellulose, 23% Wasser und 13% Ethanol zugeführt. An zwei der drei Messerköpfen wird 0,45 kg Wasserdampf pro kg CMC und an dem dritten Messerkopf 0,2 kg Wasser pro kg CMC eingeleitet. Bei einer Mischerdrehzahl von 100 min$^{-1}$ (entsprechend 4,2 m/s Umfanggeschwindigkeit) ist die Wehrstellung so eingestellt, dass das Produkt etwa 30 Minuten im Mischer verweilt. Die Messerköpfe laufen mit 3000 min$^{-1}$.

Das aus dem Mischer austretende Produkt enthält weniger als 0,1% Ethanol und 41% Wasser. Die getrocknete Carboxymethylcellulose hat ein Schüttgewicht von 480 g/l und einen Staubanteil unter 20%.

**Patentansprüche**

1. Kontinuierliches Verfahren zur Granulierung von nach üblichen Methoden hergestellter alkohol- und wasserfeuchter Carboxymethylcellulose (CMC), dadurch gekennzeichnet, dass die abgepresste, durch anhaftenden wässrigen Alkohol noch feuchte CMC kontinuierlich in ein wirbelbetterzeugendes Rühraggregat, dessen Länge- zu Durchmesser-Verhältnis > 1 ist und dessen radialumlaufendes Rührwerk (7) auf einer in Längsrichtung des Rühraggregates laufenden Welle (11) angebracht ist, eingebracht wird und von dem mit einer Umfanggeschwindigkeit von mindestens 2 m pro Sekunde umlaufenden Rührwerk (7) weiterbefördert und dabei schlagzerkleinert wird, wobei die Zerkleinerung durch senkrecht zum Rühraggregat angeordnete rotierende Messerköpfe (8) beschleunigt wird, wobei durch Wehre (10) die Verweilzeit der CMC verlängert wird, wobei die CMC mit 0,1 bis 1 kg Wasserdampf pro kg CMC in Kontakt gebracht wird, der im Gegenstrom geführt wird und wobei der Wasserdampf zusammen mit dem ausgetriebenen Alkohol (5) abgezogen wird und wobei die CMC nach einer Verzweilzeit von mindestens 1 Minute aus dem Rühraggregat ausgetragen und in üblicher Weise getrocknet wird.

2. Kontinuierliches Verfahren nach Anspruch 1, dadurch gekennzeichnet, dass das Länge- zu Durchmesser-Verhältnis im Bereich 3:1 bis 10:1 liegt.

3. Verfahren nach wenigstens einem der vorhergehenden Ansprüche, dadurch gekennzeichnet, dass die Umfanggeschwindigkeit 3 bis 5 m/s beträgt.

4. Verfahren nach wenigstens einem der vorhergehenden Ansprüche, dadurch gekennzeichnet, dass die Verweilzeit mindestens 5 Minuten beträgt.

**Revendications**

1. Procédé continu pour mettre à l'état granuleux des carboxymétylcelluloses humides d'alcool et d'eau, préparées par des procédés courants, caractérisé en ce que l'on envoi en continu la CMC essorée, encore humide de l'alcool aqueux adhérent, dans un appareil d'agitation produisant un lit tourbillonnaire, dont le rapport longueur/diamètre est supérieur à 1 et dont l'agitateur (7) radial rotatif est disposé sur un axe (11) de rotation placé lui-même dans la direction longitudinale de l'appareil d'agitation, la CMC étant alors transportée par l'agitateur (7) tournant à une vitesse périphérique d'au moins 2 m/s et broyée sous l'action des chocs, le broyage étant accéléré pas des têtes à couteaux (8) rotatives disposées perpendiculairement à l'appareil d'agitation, la durée de passage de la CMC étant prolongée par des barrage (10), la CMC étant mise en contact avec 0,1 à 1 kg de vapeur d'eau, introduite à contrecourant, par kg de CMC, la vapeur d'eau étant évacuée avec l'alcool entraîné (5) et la CMC évacuée de l'appareil d'agitation après et durée de passage d'au moins une minute et séchée de la manière habituelle.

2. Procédé continu selon la revendication 1, caractérisé en ce que le rapport longueur/diamètre se situe dans l'intervalle de 3:1 à 10:1.

3. Procédé selon au moins une des revendications qui précèdent, caractérisé en ce que la vitesse périphérique est de 3 à 5 m/s.

4. Procédé selon au moins une des revendications qui précèdent, caractérisé en ce que la durée de passage est d'au moins 5 min.

**Claims**

1. Continuous process for the granulation of alcohol- and water-moist carboxymethylcellulose (CMC) produced by customary methods, characterised in that the squeeze-dried CMC still moist with adhering aqueous alcohol is continuously introduced into a stirring unit producing a fluidised bed, the length-to-diametre ration of which unit is > 1 and the radially rotating stirrer (7) of which is mounted on a shaft (11) extending in the longitudinal direction of the stirring unit, and is moved forward, while at the same time being percussively size-reduced, by the stirrer (7) which rotates at a peripheral speed of at least 2 m per second, the size reduction being accelerated by rotating cutter heads (8) arranged vertically to the stirring unit, the residence time of the CMC being prolonged by weirs (10), the CMC being brought into contact with 0.1 to 1 kg of countercurrently directed steam per kg of CMC, the steam being removed together with the expelled alcohol (5) and the CMC being discharged from the stirring unit after a residence time of at least 1 minute and dried in a customary manner.

2. Continuous process according to claim 1, characterised in that the length-to-diameter ratio is in the range from 3:1 to 10:1.

3. Process according to at least one of the preceding claims, characterised in that the peripheral speed is 3 to 5 m/s.

4. Process according to at least one of the preceding claims, characterised in that the residence time is at least 5 minutes.

FIG. 1